## Europäisches Patentamt

## European Patent Office

## Office européen des brevets

(19)

(11) Veröffentlichungsnummer: **0 211 301 B1**

(12) **EUROPÄISCHE PATENTSCHRIFT**

(45) Veröffentlichungstag der Patentschrift: **23.12.92**

(51) Int. Cl.⁵: **F16K 15/20, B60C 29/00**

(21) Anmeldenummer: **86109954.7**

(22) Anmeldetag: **19.07.86**

(54) **Ventil für einen Fahrradschlauch und Verfahren zu seiner Herstellung.**

(30) Priorität: **31.07.85 DE 3527374**

(43) Veröffentlichungstag der Anmeldung:
**25.02.87 Patentblatt 87/09**

(45) Bekanntmachung des Hinweises auf die
Patenterteilung:
**23.12.92 Patentblatt 92/52**

(84) Benannte Vertragsstaaten:
**AT BE CH DE FR GB IT LI LU NL SE**

(56) Entgegenhaltungen:
**GB-A- 567 707**
**US-A- 2 275 081**
**US-A- 2 772 714**
**US-A- 3 489 166**

(73) Patentinhaber: **Alligator Ventilfabrik GmbH**
**Postfach 1280**
**W-7928 Giengen/Brenz(DE)**

(72) Erfinder: **Probst, Georg**
**Memelstrasse 54**
**W-7340 Geislingen(DE)**

(74) Vertreter: **Hiebsch, Gerhard F., Dipl.-Ing.**
**Hiebsch & Peege Patentanwälte Postfach**
**464 Erzbergerstrasse 5a**
**W-7700 Singen 1(DE)**

**Beschreibung**

Die Erfindung betrifft ein Ventil für einen Fahrradschlauch nach dem Oberbegriff des Patentanspruches 1. Zudem erfaßt sie ein Verfahren zu dessen Herstellung.

Sogenannte Gummifußventile sind insbesondere für Felgen-Ventillöcher von 8,3 mm bekannt und werden mit der aufgerauhten Unterfläche des Gummifußes insbesondere mit hochwertigen formgeheizten Fahrrad-Luftschläuchen auf dem Wege des Klebens oder Vulkanisierens verbunden. Derartige Gummifußventile sind in verschiedenen Gummiarten mit ungerauhter oder gerauther Fußunterfläche auf dem Markt, wobei aus Messing gefertigte Ventileinsätze mit Außengewinde damit verbunden sind. Diese Ventileinsätze nehmen dann einen Ventilkegel auf und können durch Staubkappen verschlossen werden.

Ein Ventil der oben genannten Art - allerdings nicht für einen Fahrradschlauch - ist aus der US-A 2 275 081 bekannt. Dieses bekannte Ventil älterer Bauart diente zur Verwendung bei aufblasbaren Luftreifen, wie sie früher - vor der Verwendung von schlauchlosen Reifen - zusammen mit Mänteln für Kraftfahrzeuge verwendet wurden.

Primär wird nach dieser Schrift ein Ventil aus Kautschuk hergestellt. Zuerst fertigt man ein Kernrohr aus hartem Kautschuk. Dieses Kernrohr erhält aus Elastizitätsgründen ein kurzes weicheres Kernfußrohr. Um dieses Gesamtrohr werden dann zwei Schichten in Form von Laminatteilen gewickelt, die aus weichem Kautschukmaterial bestehen, wobei die äußere Wickelschicht, für das spätere Vulkanisieren des Gesamtteiles, abgestuft kürzer sein muß.

Der harte zylindrische Kernabschnitt und der weichere äußere Abschnitt (der von den abgestuften Laminatteilen gebildet ist), werden einstückig an ihrer Verbindungsstelle zusammen vulkanisiert. Die größere Härte des oberen Kernabschittes wird erreicht durch Anheben des Schwefelgehaltes der Mischung über den Schwefelgehalt des äußeren Abschnittes.

Der Erfinder hat sich das Ziel gesetzt, ein Fahrradventil der eingangs erwähnten Art zu schaffen, welches verhältnismäßig preiswert herstellbar ist, dessen Teile problemlos zusammengefügt werden können, und das eine große Sicherheit im zusammengefügten Zustand bietet.

Zur Lösung dieser Aufgabe führen die Merkmale des Kennzeichens des Patentanspruches 1.

Weitere Merkmale der Erfindung sind in den Unteransprüchen gekennzeichnet.

An den Tellerfuß ist ein Schaftrohr aus Kunststoff angeformt, dessen Werkstoffhärte höher liegt als jene des Tellerfußes. Dabei soll die Schaftlänge zumindest das Fünffache der Fußhöhe betragen, so daß das Schaftrohr an sich bekannte zusätzliche Einsätze an Fahrradventilen ersetzt.

Nach einem weiteren Merkmal der Erfindung ist der Tellerfuß mit dem Fahrradschlauch einstückig hergestellt, was die Fertigung erheblich vereinfacht. Von besonderer Bedeutung ist der stufenlose Uebergang zwischen dem weichen und härteren Bereich des Ventilgehäuses aus Tellerfuß und Schaftrohr bei einer bevorzugten Härte des härteren Bereiches im Auslieferungszustand von etwa 50 Shore D und einer Härte des weicheren Tellerfußes von etwa 65 Shore A.

Nach einem weiteren Merkmal des Fahrradventils soll dessen härterer Kunststoff mit zumindest einem weicheren Werkstoff im Ventilkörper molekular verbunden sein, um jegliches Lösen hintanzuhalten.

Vorteilhafterweise umfaßt der härtere Bereich einen zylindrischen Teil des Ventilgehäuses mit Außengewinde.

Insgesamt bringt ein Ventilgehäuse dieser Art die gewünschte Vereinfachung der Herstellung mit sich und bietet darüber hinaus eine hohe Betriebssicherheit an.

Im Rahmen der Erfindung liegt ein Verfahren zum Herstellen des beschriebenen Ventilgehäuses durch Einspritzen von Kunststoff in eine Form, welche die äußeren und inneren Oberflächen des Ventilgehäuses bestimmt, wobei in die Form zuerst ein Werkstoff einer Härte von etwa 65 Shore A so eingespritzt wird, daß dieser den Sockelbereich füllt und anschließend ein Kunststoff einer Härte von etwa 50 Shore D eingespritzt wird. Zudem soll der härtere Kunststoff mit höherem Druck eingespritzt werden.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1:    eine teilweise geschnittene Seitenansicht eines erfindungsgemäßen Ventilkörpers;

Fig. 2:    eine Schemaskizze eines Ventileinsatzes;

Fig. 3:    einen geschnittenen Teil eines Fahrradschlauches mit Ventilkörper.

Ein Ventilgehäuse 10 für ein Fahrradventil besteht aus einem Tellerfuß 11 eines Durchmessers d von hier 27 mm mit angeformten Schaftrohr 12 einer gemeinsamen Höhe h von beispielsweise 26,5 mm. Im Uebergangsbereich zwischen dem ein Außengewinde 13 aufweisenden Schaftrohr 12 und dem Tellerfuß 11 ist ein umlaufender schräger Schulterabsatz 14 zu erkennen, dessen Außendurchmesser 9,3 mm mißt.

Der Abstand b des Schulterabsatzes 14 zur unteren Abschlußfläche 15 des Tellerfußes 11 beträgt 4,6 mm.

Vom oberen Rand 16 des Ventilgehäuses 10 -- an den als Uebergang zur Außenfläche 17 des Schaftrohres 12 eine auswärts geneigte Ringfläche 18 als Abschluß des Außengewindes 13 anschließt -- bis zu jener Abschlußfläche 15 erstreckt sich in der Längsachse A des Ventilgehäuses 10 ein Kanal (Abschnitte) mit einer konischen Innenfläche (Ventilsitz) 20 zwischen dem oberen Abschnitt 19 des Kanals einer Länge i (hier: 6 mm) und eines Durchmessers q von 5,7 mm einerseits sowie einem unteren Abschnitt 19a des Kanals $19_a$ des Durchmesser $q_1$ von 4,2 mm.

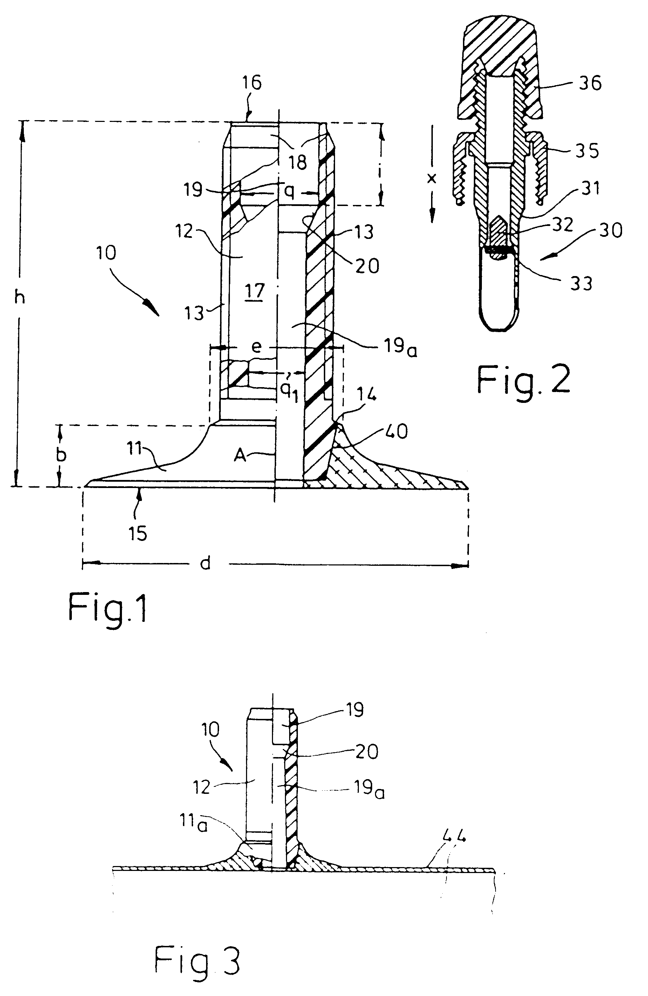

In den Kanal 19, 20, $19_a$ wird in Richtung x ein in Fig. 1 nicht dargestellter Ventileinsatz 30 eingeschoben, wie er in Fig. 2 skizziert ist. Wenn eine Kegelfläche (Gegenfläche) 31 dieses Ventileinsatzes 30 jener konischen Innenfläche 20 des Schaftrohres 12 dicht anliegt, ist ein Ausströmen von Luft zwischen Ventilgehäuse 10 und Ventileinsatz 30 verhindert. In Fig. 2 ist mit 32 ein Einsatzkegel und mit 33 eine Dichtung bezeichnet, mit 35 eine Ueberwurfmutter und mit 36 eine Staubkappe.

Der Tellerfuß 11 besteht aus einem weichen thermoplastischen Kunststoff der polymeren Gruppe der Polyolefine mit einer als Fallhärte bestimmten Härte des Werkstoffes im Anlieferungszustand im bevorzugten Bereich um 65 Shore A, worin 65 die wirkliche 5 sec Härte angibt, und ist mit dem Schaftrohr 12 einstückig, das mit einem härteren Kunststoff einer bevorzugten Härte von 50 Shore D in einem Arbeitsgang angeformt wurde. Dabei ragt der Werkstoff des Schaftrohres 12 unter Bildung einer Grenzfläche 40 kegelstumpfartig in den weichen Werkstoff hinein.

Von wesentlicher Bedeutung ist also, daß das Ventilgehäuse 10 insgesamt aus Kunststoff besteht und zwar dergestalt, daß er im Fußbereich (Tellerfuß) von geringerer Härte ist als an jene axiale Abschnitte 19, $19_a$ begrenzenden Innenflächen sowie am Sitzkonus 20.

Ein erfindungsgemäßes Ventilgehäuse 10 wird beispielsweise aus einem unter dem Namen Santoprene bekannten Kautschuk erzeugt, wobei der Werkstoff des Tellerfußes 11 Santoprene® 101 - 64 und der Kautschuk des Schaftrohres Santoprene 103 - 50 ist.

Für den weicheren Kautschuk gelten näherungsweise die Werte der Tabelle I, für den härteren Kautschuk jene der Tabelle II.

Bei der Herstellung eines derartigen Ventilgehäuses 10 wird in eine dessen Konturen bestimmende Form der weichere Kunststoff an die Formfußflächen geführt und anschließend ein härterer Kunststoff in Längsachsennähe eingebracht.

So entsteht ein molekularer Verbund zwischen den beiden Bereichen, wobei es von untergeordneter Bedeutung bleibt, ob die Begrenzung der Fallhärtebereiche die theoretische Grenz- oder Trennfläche 40 erzeugt oder der allmähliche Uebergang nicht mehr deutlich festzustellen ist.

In jedem Falle wird erreicht, daß das Ventilgehäuse 10 einerseits einstückig ist, jedoch zum anderen sowohl elastische Zonen aufweist als auch harte Oberflächen, wie dies insbesondere nahe des Ventileinsatzes 30 erforderlich ist.

Fig. 3 läßt erkennen, daß der Tellerfuß $11_a$ Teil eines nur angedeuteten Fahrradschlauches 44 ist, also mit letzterem einstückig hergestellt wurde.

## TABELLE I

| Prüftemperatur °C | Altern Zeit, Tage | 100% Umrechnungsfaktor** | | | Bruchdehnung** | | | Shorehärte A*** |
|---|---|---|---|---|---|---|---|---|
| | | psi | MPa | %Retent. | psi | MPa | %Retent. | 5 Sek., Wechsel |
| 100 | 1 | 333 | 2.3 | 100 | 890 | 6.1 | 102 | 0 |
| | 15 | 336 | 2.3 | 101 | 880 | 6.1 | 101 | +1 |
| | 41.7 (1000 h) | 339 | 2.3 | 101 | 900 | 6.2 | 103 | +2 |
| 125 | 1 | 329 | 2.3 | 99 | 888 | 6.1 | 102 | 0 |
| | 15 | 344 | 2.4 | 103 G | 962 | 6.6 | 111 | +1 |
| | 41.7 (1000 h) | 347 | 2.4 | 104 | 980 | 6.8 | 113 | +2 |
| 150 | 1 | 320 | 2.2 | 96 | 894 | 6.2 | 103 | 0 |
| | 30 | 380 | 2.6 | 114 | 507 | 3.5 | 58 | +8 |
| | 41.7 (1000 h) | - | - | - | 439 | 3.0 | 50 | +9 |

** Spannung-Dehnung ASTM D 412   (ASTM = American Society of Testing Materials)

***Härte   ASTM D 2240

TABELLE II

| Prüftemperatur °C | Altern Zeit, Tage | 100% Umrechnungsfaktor** | | | Bruchdehnung** | | | Shorehärte D*** 5 Sek., Wechsel |
|---|---|---|---|---|---|---|---|---|
| | | psi | MPa | %Retent. | psi | MPa | %Retent. | |
| 100 | 1 | 1664 | 11.5 | 107 | 3756 | 27.3 | 96 | 0 |
| | 15 | 1752 | 12.1 | 112 | 3886 | 26.8 | 100 | 0 |
| | 41.7 (1000 h) | 1771 | 12.2 | 113 | 3921 | 27.0 | 101 | 0 |
| 125 | 1 | 1769 | 12.2 | 113 | 3758 | 25.9 | 96 | 0 |
| | 15 | 1871 | 12.9 | 120 | 3886 | 26.8 | 100 | 0 |
| | 41.7 (1000 h) | 1925 | 13.3 | 123 | 3759 | 25.9 | 96 | +4 |
| 150 | 1 | 1891 | 13.0 | 121 | 3520 | 24.3 | 90 | 0 |
| | 15 | 1983 | 13.7 | 127 | 2561 | 17.7 | 66 | +3 |
| | 41.7 (1000 h) | - | - | - | - | - | - | +10 |

** Spannung-Dehnung ASTM D 638    (ASTM = American Society of Testing Materials)

***Härte  ASTM D 2240

## Patentansprüche

1. Ventil für einen Fahrradschlauch (44) mit einem Tellerfuß (11, 11a) aus gummiartigem Werkstoff, an den ein Schaftrohr (12) aus Kunststoff mit im Vergleich zum Tellerfuß höherer Werkstoffhärte angeformt ist, wobei Tellerfuß und Schaftrohr ein Ventilgehäuse (10) bilden, wobei das Schaftrohr in einer axialen Ausnehmung, die unterschiedliche und in Abstand zum Tellerfuß größer werdende Durchmesser

5

EP 0 211 301 B1

aufweisende Abschnitte besitzt, einen festlegbaren Einsatz (30) aufnimmt, und wobei der härtere Bereich des Schaftrohres einen zylindrischen Teil mit Außengewinde (13) umfaßt,
dadurch gekennzeichnet,
daß zwischen zwei Abschnitten (19, 19a) der Ausnehmung des Schaftrohres ein sich konisch erweiternder Ventilsitz (20) für eine an ihn heranführbare Gegenfläche (31) des als Ventilkörper ausgebildeten Einsatzes (30) vorgesehen ist, und daß das Schaftrohr bis zu einer Grenzfläche (40) im Tellerfuß einheitliche Werkstoffhärte aufweist.

2. Ventil nach Anspruch 1, dadurch gekennzeichnet, daß der Tellerfuß (11, 11a) Teil des Fahrradschlauches (44) und mit diesem in einem Arbeitsgang hergestellt ist.

3. Ventil nach Anspruch 1 oder 2, dadurch gekennzeichnet, daß der Uebergang zwischen dem weichen und dem härteren Bereich stufenlos ist.

4. Ventil nach Anspruch 1 oder 3, dadurch gekennzeichnet, daß die Grenzfläche (40) zwischen Schaftrohr (12) und Tellerfuß (11, 11a) kegelstumpfartig ausgebildet ist.

5. Ventil nach einem der Ansprüche 1 bis 4, dadurch gekennzeichnet, daß der härtere Kunststoff mit dem weicheren Werkstoff molekular verbunden ist.

6. Ventil nach einem der Ansprüche 1 bis 5, dadurch gekennzeichnet, daß der härtere Bereich im Auslieferungszustand etwa 50 Shore D aufweist.

7. Ventil nach wenigstens einem der Ansprüche 1 bis 6, dadurch gekennzeichnet, daß der Werkstoff des weicheren Bereiches eine Härte von etwa 65 Shore A im Auslieferungszustand aufweist.

8. Ventil nach einem der Ansprüche 1 bis 7, dadurch gekennzeichnet, daß das Außengewinde (13) eine Überwurfmutter (35) zum Festlegen des Ventileinsatzes (30) aufnimmt.

9. Ventil nach wenigstens einem der Ansprüche 1 bis 8, dadurch gekennzeichnet, daß die Länge (h) von Tellerfuß (18) und Schaftrohr (12) etwa 27 mm beträgt bzw. die Schaftrohrlänge zumindest der fünffachen Höhe (b) des Tellerfußes entspricht.

10. Verfahren zur Herstellung eines Ventilgehäuses nach wenigstens einem der Ansprüche 1 bis 9 durch Einspritzen von Kunststoff in eine Form, welche die äußeren und inneren Oberflächen des Ventilgehäuses bestimmt, wobei in die Form zuerst ein Werkstoff einer Härte von etwa 65 Shore A so eingespritzt wird, daß dieser den Sockelbereich füllt, und anschließend ein Kunststoff einer Härte von etwa 50 Shore D eingespritzt wird.

11. Verfahren nach Anspruch 10, dadurch gekennzeichnet, daß der härtere Kunststoff mit höherem Druck eingespritzt wird.

**Claims**

1. Valve for a bicycle tube (44) comprising a flat base (11, 11a) of elastomeric material with which a plastic tube (12) having a greater material hardness than the flat base is integrally moulded, the flat base and the tube forming a valve casing (10), the tube receiving a fixable cartridge (30) in an axial recess having sections with different diameters increasing away from the flat base, and the harder region of the tube including a cylindrical part with an external thread, characterised in that a reverse taper valve seat (20) is provided between two sections (19, 19a) of the recess of the tube for a mating surface (31) of the cartridge (30) in the form of a valve body which can be advanced towards said valve seat, and that the tube displays uniform material hardness up to a boundary surface (40) in the flat base.

2. Valve according to claim 1, characterised in that the flat base (11, 11a) is part of the bicycle tube (44) and is produced in one step therewith.

3. Valve according to claim 1 or claim 2, characterised in that the transition from the soft to the harder region is stepless.

4. Valve according to claim 1 or claim 3, characterised in that the boundary surface (40) between the tube (12) and the flat base (11, 11a) is in the shape of a truncated cone.

5. Valve according to one of claims 1 to 4, characterised in that the harder plastic is combined molecularly with the softer material.

6. Valve according to one of claims 1 to 5, characterised in that the harder region has a Shore hardness number of approximately 50 D as delivered.

7. Valve according to at least one of claims 1 to 6, characterised in that the material of the softer region has a Shore hardness number of approximately 65 A as delivered.

8. Valve according to one of claims 1 to 7, characterised in that the external thread (13) receives a union nut (35) for securing the valve cartridge (30).

9. Valve according to at least one of claims 1 to 8, characterised in that the length (h) of the flat base (18) and the tube (12) is approximately 27 mm or the tube length corresponds to at least five times the height (b) of the flat base.

10. Process for the production of a valve casing according to at least one of claims 1 to 9 by injecting plastic into a mould which defines the outer and inner surfaces of the valve casing, a material having a Shore hardness number of approximately 65 A first being injected into the mould in such a manner that it fills the base region and then a plastic having a Shore hardness number of approximately 50 D being injected.

11. Process according to claim 10, characterised in that the harder plastic is injected at a higher pressure.

**Revendications**

1. Valve destinée à une chambre à air (44) pour cycles, comportant un pied en forme de disque (11, 11a) en un matériau du type caoutchouc, sur lequel est formée une tige tubulaire (12) en matière plastique d'une dureté plus élevée comparativement à celle du pied en forme de disque, le pied en forme de disque et la tige tubulaire formant un corps de valve (10), la tige tubulaire recevant, dans un évidement axial qui comporte différents tronçons de diamètre croissant en s éloignant du pied en forme de disque, un insert (30) susceptible d'être fixé, et la zone plus dure de la tige tubulaire comportant une partie cylindrique à filetage extérieur (13),
   caractérisée
   en ce qu'entre deux tronçons (19, 19a) de l'évidement de la tige tubulaire, il est prévu un siège de valve (20) s'évasant de manière conique et destiné à une surface conjuguée (31) susceptible d'être appliquée contre le siège et faisant partie de l'insert (30) réalisé sous la forme de clapet de valve, et en ce que la tige tubulaire présente une dureté uniforme jusqu'à une surface limite (40) dans le pied en forme de disque.

2. Valve selon la revendication 1, caractérisée en ce que le pied en forme de disque (11, 11a) fait partie de la chambre à air (44) pour cycles, et est fabriqué avec celle-ci en une seule opération.

3. Valve selon la revendication 1 ou 2, caractérisée en ce que la transition entre la zone molle et la zone plus dure se fait de manière continue.

4. Valve selon la revendication 1 ou 3, caractérisée en ce que la surface limite (40) entre la tige tubulaire (12) et le pied en forme de disque (11, 11a) est réalisée de manière à présenter une forme tronconique.

5. Valve selon l'une des revendications 1 à 4, caractérisée en ce que la matière plastique plus dure est liée de manière moléculaire au matériau plus mou.

**6.** Valve selon l'une des revendications 1 à 5, caractérisée en ce que la zone plus dure présente dans son état lors de la livraison, une dureté Shore D d'environ 50.

**7.** Valve selon l'une au moins des revendications 1 à 6, caractérisée en ce que le matériau de la zone plus molle présente dans son état lors de la livraison, une dureté Shore A d'environ 65.

**8.** Valve selon l'une des revendications 1 à 7, caractérisée en ce que le filetage extérieur (13) reçoit un écrou d'accouplement (35) pour fixer l'insert de valve (30).

**9.** Valve selon l'une au moins des revendications 1 à 8, caractérisée en ce que la longueur (h) du pied en forme de disque (11, 11a) et de la tige tubulaire (12), vaut environ 27 mm, la longueur de la tige tubulaire correspondant au moins à cinq fois la hauteur (b) du pied en forme de disque.

**10.** Procédé de fabrication d'un corps de valve selon l'une au moins des revendications 1 à 9, par injection de matière plastique dans un moule qui détermine les surfaces extérieures et intérieures du corps de valve, dans lequel on injecte d'abord dans le moule un matériau d'une dureté Shore A d'environ 65, de façon à remplir la partie de base, et on injecte ensuite une matière plastique d'une dureté Shore D d'environ 50.

**11.** Procédé selon la revendication 10, caractérisé en ce que la matière plastique plus dure est injectée sous une pression plus élevée.

Fig.1

Fig.2

Fig 3